(19) Europäisches Patentamt
European Patent Office
Office européen des brevets

(11) **EP 2 499 796 B1**

(12) **FASCICULE DE BREVET EUROPEEN**

(45) Date de publication et mention
de la délivrance du brevet:
**29.07.2015 Bulletin 2015/31**

(21) Numéro de dépôt: **09827007.7**

(22) Date de dépôt: **09.11.2009**

(51) Int Cl.:
*H04L 27/26* (2006.01)     *H04L 25/03* (2006.01)
*H04L 1/06* (2006.01)     *H04B 7/04* (2006.01)

(86) Numéro de dépôt international:
**PCT/FR2009/052154**

(87) Numéro de publication internationale:
**WO 2011/055024 (12.05.2011 Gazette 2011/19)**

(54) **Procédé pour émettre des données numériques pre-egalisées, et base émettrice mettant en oeuvre un tel procédé**

Verfahren zur Übertragung von vorentzerrten Daten sowie Übertragungsbasis dafür

Method for transmitting pre-equalized digital data, and transmitting base implementing such a method

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(43) Date de publication de la demande:
**19.09.2012 Bulletin 2012/38**

(73) Titulaires:
• **Time Reversal Communications**
**95861 Cergy-Pontoise Cedex (FR)**
• **Centre National de la Recherche Scientifique (CNRS)**
**75794 Paris Cedex 16 (FR)**

(72) Inventeurs:
• **DE ROSNY, Julien**
**F-94130 Nogent Sur Marne (FR)**
• **LEROSEY, Geoffroy**
**F-75003 Paris (FR)**
• **TOURIN, Arnaud**
**F-92310 Sevres (FR)**
• **FINK, Mathias**
**F-92190 Meudon (FR)**

(74) Mandataire: **Bonnet, Michel**
**Cabinet Bonnet**
**93, rue Réaumur - Boîte 10**
**75002 Paris (FR)**

(56) Documents cités:
**US-A1- 2005 180 312**

• **KOIKE-AKINO T ET AL: "Unified Analysis of Linear Block Precoding for Distributed Antenna Systems" GLOBAL TELECOMMUNICATIONS CONFERENCE, 2009. GLOBECOM 2009. IEEE, IEEE, PISCATAWAY, NJ, USA, 30 novembre 2009 (2009-11-30), pages 1-6, XP031645718 ISBN: 978-1-4244-4148-8**

**Description**

La présente invention est relative à un procédé pour émettre des données numériques sur un canal de communication.

Plus particulièrement, l'invention concerne un procédé pour émettre des données numériques sur un canal de communication, entre une base émettrice comprenant des antennes d'émission d'indice n, n compris entre 1 et N, N entier naturel supérieur ou égal à 1, et des récepteurs d'indice k, k compris entre 1 et K, K entier naturel supérieur à 1, comprenant chacun au moins une antenne de réception, procédé dans lequel on utilise une porteuse de signal de fréquence $f_0$ pour transmettre les données numériques dans le canal de communication, et des sous-porteuses d'indice m, m compris entre 1 et M, M entier naturel supérieur ou égal à 1, adaptées pour transmettre en parallèle K flux de données numériques $s_k$ de la base émettrice , chaque flux de données numériques $s_k$ étant destiné à chaque récepteur d'indice k.

Dans le canal de communication, les signaux émis suivent simultanément une multitude de chemins différents, en subissant des réflexions. Chaque antenne de réception reçoit un signal qui est la superposition d'une multitude de signaux correspondant à cette multitude de chemins entre la base émettrice et chaque récepteur, de telle sorte qu'il se produit des phénomènes d'interférences qui, dans certaines positions particulières de l'antenne d'un récepteur, peuvent perturber ou annuler le signal capté par le récepteur.

On connait des procédés de transmission utilisant une technologie de modulations multi-porteuses, du type OFDM (pour « Orthogonal Frequency Division Multiplexing »), qui consiste à multiplexer sur des sous-porteuses fréquentielles, des données numériques à transmettre sur un canal de communication. Ces sous-porteuses sont séparées en fréquence et orthogonales entre elles pour réduire les interférences.

Ainsi, pour un débit identique à un procédé de modulation mono-porteuse, les signaux ont des durées temporelles plus grandes, et les échos temporels dans le canal de communication ont un effet réduit, c'est-à-dire que l'interférence inter-symboles (ISI) entre des données numériques consécutives est plus faible.

La demande de brevet US2005/180312 A divulgue un système MISO OFDM avec pré-égalisation dérivée de la réponse du canal. Ces procédés multi-porteuses, bien que très avantageux, ne permettent pas d'annuler complètement le problème d'interférence, et il est par exemple habituel d'ajouter un espace temporel entre chaque donnée numérique émise, appelé intervalle de garde, qui conduit inévitablement à une perte de débit.

Or, les besoins en débits de données sont de plus en plus importants, et poussent au contraire à réduire la durée temporelle d'une donnée numérique sur le canal de communication.

La présente invention a notamment pour but de perfectionner ces procédés, en permettant de pallier les inconvénients susmentionnés.

A cet effet, le procédé de l'invention comprend les étapes suivantes :

(a1) on transforme chacun des K flux de données numériques $s_k$ en M flux parallèles $s_k$ (m) de symboles, chacun des flux parallèles étant destiné à une sous-porteuse d'indice m,
(b1) on calcule N.M symboles complexes $t_n(m)$ à partir des K.M symboles $s_k(m)$, par :

$$t_n(m) = \sum_{k=1}^{K} \alpha_k . H_{k,n}^{*}(m) . s_k(m)$$

où
* dénote une valeur complexe conjuguée, $H_{k,n}(m)$ est une valeur complexe estimant la fonction de transfert du canal de communication entre l'antenne d'émission n et l'antenne de réception k à une fréquence correspondante de la sous-porteuse m, et $\alpha_k$ est un coefficient de normalisation,
(c1) on réalise N modulations multi-porteuses des symboles complexes $t_n(m)$, m compris entre 1 et M, pour produire N signaux d'émission $v_n(t)$, chaque signal d'émission $v_n(t)$ étant destiné à une antenne d'émission n, et toutes les modulations multi-porteuses étant synchrones entre-elles, et
(d1) on émet chaque signal d'émission $v_n(t)$ dans le canal de communication par l'antenne d'émission n de la base émettrice.

Grâce à ces dispositions, et notamment grâce au traitement de l'étape (b1), le procédé selon l'invention présente au moins les avantages suivants :

-  premièrement, les signaux émis par les antennes d'émission arrivent et se combinent en phase sur chaque antenne de réception, malgré la multitude de chemins dans le canal de communication. Ainsi, les échos dans le signal temporel reçu sur une antenne de réception sont atténués, et l'ISI est encore réduite ;

- deuxièmement, les signaux émis par les antennes d'émission sont spatialement focalisées sur les antennes de réception. Chaque récepteur ne reçoit presque plus que le signal qui lui est destiné, et les communications vers les différents récepteurs sont alors en quel que sorte isolées les unes des autres, ce qui améliore la sécurité de transmission.

De plus, l'étape (b1) est une manière de calculer approximativement un produit de convolution entre un signal temporel $s_k(t)$ à émettre dans le canal de communication et une inversion temporelle de la réponse impulsionnelle $h_{k,n}(t)$, $H_{k,n}(m)$ étant des valeurs complexes estimant l'amplitude et la phase de la réponse impulsionnelle $h_{k,n}(t)$ aux fréquences de chaque sous-porteuse d'indice m. Le lecteur se réfèrera au brevet FR-2 748 137 pour cette technique de communication. Grâce à l'utilisation de sous-porteuses fréquentielles multiplexées, le calcul temporel de ce document antérieur est effectué à moindre coût calcul puisque les informations sont dans le domaine fréquentiel et améliore sensiblement la technique multi-porteuses du type OFDM puisque l'ISI est encore plus réduite. Ces deux techniques sont donc avantageusement combinées.

Dans divers modes de réalisation du procédé pour émettre des données numériques selon l'invention, on peut éventuellement avoir recours en outre à l'une et/ou à l'autre des dispositions suivantes :

- la modulation multi-porteuses des symboles complexes $t_n(m)$, m compris entre 1 et M, est effectuée par les étapes suivantes :

   (a2) on calcule une transformée de Fourier inverse (IFFT) des symboles complexes $t_n(m)$ pour produire des symboles complexes transformés $u_n(m)$, par :

   $u_n(m) = IFFT(t_n(m))$, pour m compris entre 1 et M,

   (b2) on met temporellement en série ces symboles complexes transformés $u_n(m)$ dans un flux série de symboles,
   (c2) on réalise une modulation synchrone de ce flux série avec la porteuse de signal de fréquence $f_0$ pour produire des signaux modulés $u_{n,m}(t)$ de chaque antenne d'émission n par :

$$u_{n,m}(t) = \Re\left(u_n(m).e^{2i\pi f_0 t}\right)$$

   où

   $\Re( )$ est la partie réelle,

   i est le nombre complexe défini par $i = \sqrt{-1}$, et
   t est le temps,
   (d2) on filtre chaque signal modulé $u_{n,m}(t)$ et on produit un signal d'émission $v_n(t)$ pour chaque antenne d'émission, par :

$$v_n(t) = \sum_{j=1}^{\infty} \sum_{m=1}^{M} u_{n,m}(t).h\left(t - (j-1).T_S - (m-1).\frac{T_S}{M}\right)$$

   où
   h(t) est la réponse impulsionnelle d'un filtre en émission ;

- la transformée de Fourier inverse (IFFT) des symboles complexes $t_n(m)$ pour produire des symboles complexes transformés $u_n(m)$ est calculée par :

$$u_n(m) = \frac{1}{M}.\sum_{p=1}^{M} t_n(p).e^{\left(+\frac{2i\pi}{M}\right).(m-1).(p-1)} \quad ;$$

- le coefficient de normalisation $\alpha_k$ est une constante prédéterminée $\alpha$ ;

- le coefficient de normalisation $\alpha_k$ est une valeur calculée à partir des valeurs des symboles $s_k(m)$ et des valeurs des fonctions de transfert du canal de communication $H_{k,n}(m)$ ;
- le coefficient de normalisation $\alpha_k$ est calculé par :

$$|\alpha|^2 = \frac{\Pi}{\left\langle |s(m)|^2 \right\rangle \sum_n \sum_k |H_{k,n}(m)|^2} = \alpha_k$$

où

$\Pi$ est une puissance moyenne émise prédéterminée,

< > représente une moyenne sur les symboles,

$\left\langle |s(m)|^2 \right\rangle$ est la variance des symboles ;

- le coefficient de normalisation $\alpha_k$ est calculé par :

$$|\alpha_k|^2 = \frac{\Pi}{\left\langle |s(m)|^2 \right\rangle \left( \sum_n |H_{k,n}(m)|^2 \right)^2 \sum_k \left( \sum_n |H_{k,n}(m)|^2 \right)^{-1}}$$

où

$\Pi$ est une puissance moyenne émise prédéterminée,

< > représente une moyenne sur les symboles, $\left\langle |s(m)|^2 \right\rangle$ est la variance des symboles ;

- le coefficient de normalisation $\alpha_k$ est calculé par :

$$|\alpha_k|^2 = \frac{\Pi}{\left\langle |s(m)|^2 \right\rangle \left( \sum_n |H_{k,n}(m)|^2 \right)^2 \sum_{k'} \frac{\beta_{k'}^2}{\left( \sum_n |H_{k',n}(m)|^2 \right)}} \beta_k^2$$

où

$\Pi$ est une puissance moyenne émise prédéterminée,

$\beta_k$ est une puissance moyenne prédéterminée reçue par l'antenne de réception k,

< > représente une moyenne sur les symboles,

$\left\langle |s(m)|^2 \right\rangle$ est la variance des symboles ;

- chaque valeur complexe $H_{k,n}(m)$ est une valeur estimant uniquement la phase du transfert du canal de communication entre l'antenne d'émission n et l'antenne de réception k à la fréquence correspondante de la sous-porteuse m ;
- le coefficient de normalisation $\alpha_k$ est calculé par :

$$|\alpha_k|^2 = |\alpha|^2 = \frac{\Pi}{\left\langle |s(m)|^2 \right\rangle NK}$$

où

$\Pi$ est une puissance moyenne émise prédéterminée,

< > représente une moyenne sur les symboles,

$\left\langle |s(m)|^2 \right\rangle$ est la variance des symboles ;

- le coefficient de normalisation $\alpha_k$ est calculé par :

$$|\alpha_k|^2 = \frac{\Pi}{\left\langle |s|^2 \right\rangle \left( \sum_n |H_{k,n}(m)| \right)^2 N \sum_{k'} \left( \sum_n |H_{k',n}(m)| \right)^{-2}}$$

ou

$\Pi$ est une puissance moyenne émise prédéterminée,

< > représente une moyenne sur les symboles,

$\langle |s(m)|^2 \rangle$ est la variance des symboles.

- le coefficient de normalisation $\alpha_k$ est calculé par :

$$|\alpha_k|^2 = \frac{1}{\langle |s|^2 \rangle} \frac{\Pi \beta_k^2}{\left( \sum_n |H_{k,n}(m)| \right)^2 N \sum_{k'} \frac{\beta_{k'}^2}{\left( \sum_n |H_{k',n}(m)| \right)^2}}$$

où

$\Pi$ est une puissance moyenne émise prédéterminée,

$\beta_k$ est une puissance moyenne prédéterminée reçue par l'antenne de réception k,

< > représente une moyenne sur les symboles,

$\langle |s(m)|^2 \rangle$ est la variance des symboles.

L'invention se rapporte également à une base émettrice comprenant :

- des moyens de calcul adaptés pour mettre en oeuvre le procédé précédent et générer N signaux d'émission $v_n(t)$ d'indice n, n compris entre 1 et N, N entier naturel supérieur ou égal à 1, à partir de K flux de données numériques $s_k$ d'indice k, k compris entre 1 et K, K entier naturel supérieur à 1, et
- des antennes d'émission adaptées pour émettre dans un canal de communication chaque signal d'émission $v_n(t)$.

D'autres caractéristiques et avantages de l'invention apparaîtront au cours de la description suivante d'un de ses modes de réalisation, donné à titre d'exemple non limitatif, en regard des dessins joints.

Sur les dessins :

- la figure 1 est un schéma illustrant un procédé et dispositif d'émission de l'art antérieur,
- la figure 2 est un schéma illustrant un procédé et dispositif de réception de l'art antérieur,
- la figure 3 est un schéma illustrant un procédé et dispositif d'émission selon l'invention.

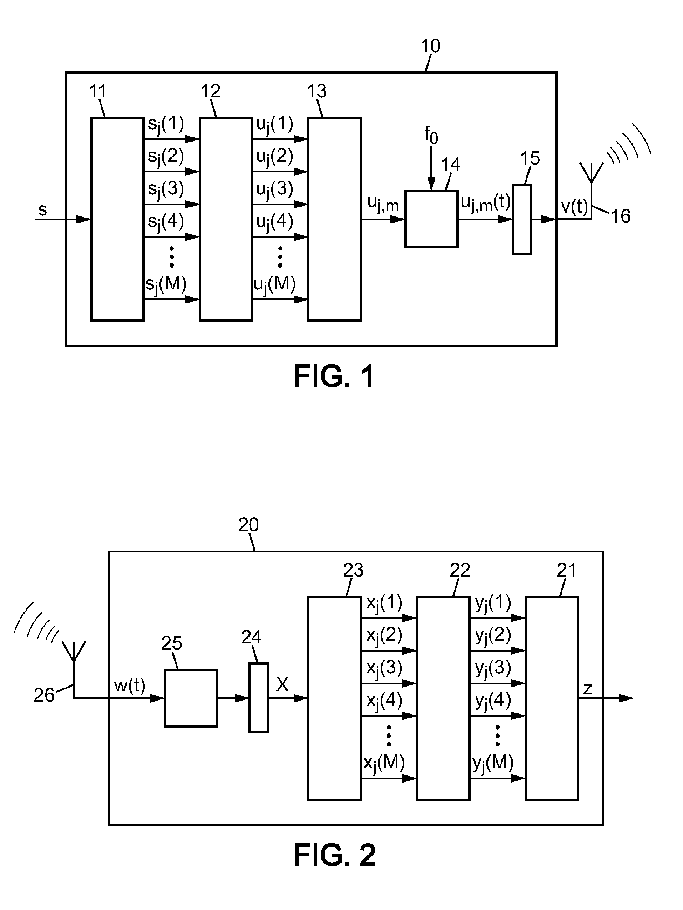

La **figure 1** illustre les principes généraux d'un dispositif d'émission 10 de données numériques utilisant la technologie OFDM.

L'OFDM est notamment utilisé dans les systèmes numériques de diffusion d'audio (DAB), de diffusion vidéo (DVB), dans les réseaux filaires (DSL), dans les réseaux sans fil (WIFI), et dans les réseaux de communication de téléphones cellulaires (UMTS).

Dans le dispositif d'émission 10, la lettre s désigne des données numériques à transmettre en série dans le canal de communication. Ces données numériques s sont par exemple des informations binaires.

Un démultiplexeur 11 réalise une transformation série-parallèle, et transforme, à un instant temporel d'indice j, ce flux série de données numériques s en M flux parallèles de symboles $s_j(m)$, notés $s_j(1)$, $s_j(2)$ à $s_j(M)$. Ces M flux parallèles de symboles $s_j(m)$ ont une cadence temporelle M fois plus faible que le flux série de données numériques s. Chacun de ces flux parallèles de symboles $s_j(m)$ est destiné à être transmis sur une sous-porteuse d'indice m de la bande passante. A l'instant temporel d'indice j, un vecteur $s_j$ de composantes $s_j(m)$, m compris entre 1 et M, est appelé symbole OFDM. Sa durée est d'une période $T_s$, alors que la durée d'une donnée numérique du flux série s est de $T_s/M$.

Une transformée de Fourier rapide inverse 12 (ou IFFT pour « Inverse Fast Fourier Transform ») transforme ces symboles $s_j(m)$ en symboles transformés $u_j(m)$, notés $u_j(1)$, $u_j(2)$ à $u_j(M)$. Notamment, on aura :

$$u_j(m) = \frac{1}{M} \cdot \sum_{p=1}^{M} s_j(p).e^{\left( +\frac{2i\pi}{M} \right).(m-1).(p-1)} \qquad (1)$$

où

i est le nombre complexe défini par $i = \sqrt{-1}$,

j est un indice correspondant à un instant temporel pendant lequel un symbole OFDM est transmis, et

m est un indice correspondant à une sous-porteuse.

Un multiplexeur 13 réalise une transformation parallèle-série, et transforme les M flux parallèles de symboles transformés $u_j(m)$ en un seul flux série $u_{j,m}$ de mêmes symboles transformés.

Un modulateur 14, tel qu'un modulateur en quadrature réalise une modulation sur le signal porteur à une fréquence $f_0$ pour générer un signal modulé $u_{j,m}(t)$, continu du temps, à partir du flux série $u_j$ de symboles transformés. Notamment, dans le cas de données numériques complexes et de l'utilisation d'une modulation en quadrature, on obtient :

$$u_{j,m}(t) = \Re\left(u_j(m).e^{2i\pi f_0 t}\right) \qquad (2)$$
$$u_{j,m}(t) = \Re\left(u_j(m)\right).\cos(2\pi f_0 t) - \Im\left(u_j(m)\right).\sin(2\pi f_0 t)$$

où

$\Re(\ )$ et $\Im(\ )$ sont respectivement les parties réelles et imaginaires,

cons( ) et sin( ) sont respectivement les fonctions cosinus et sinus, et

t est le temps.

Ensuite, un filtre en émission 15 transforme ce signal modulé $u_{j,m}(t)$ en un signal filtré $v_{j,m}(t)$, ce qui conduit à :

$$v_{j,m}(t) = u_{j,m}(t).h\left(t - (j-1).T_S - (m-1).\frac{T_S}{M}\right) \qquad (3)$$

Où

h(t) est la réponse impulsionnelle du filtre en émission 15, et

$T_S$ la période temporelle d'un symbole OFDM, c'est-à-dire la cadence temporelle de ces symboles OFDM.

Le filtre en émission peut être une simple forme d'onde rectangulaire de durée $T_S/M$ ou peut avantageusement être la convolution d'une telle forme d'onde par un filtre passe-bas en fréquence ou un filtre passe-bande, adapté pour appliquer une amplification et limiter la bande passante en fréquence du signal d'émission.

Un signal d'émission v(t) correspond au signal filtré $v_{j,m}(t)$ pour tous les indices j de symbole OFDM et pour tous les indices m de sous-porteuse, c'est à dire :

$$v(t) = \sum_{j=1}^{\infty} \sum_{m=1}^{M} v_{j,m}(t) \qquad (4)$$

Les étapes entre le calcul de la transformées de Fourier inverse d'un symbole OFDM et la formation du signal d'émission v(t) peut être appelé modulation multi-porteuses. Le calcul de transformée de Fourier inverse du symbole OFDM évite la réalisation de M modulateurs aux fréquences des sous-porteuses m, qui nécessiteraient une très bonne synchronisation. La modulation multi-porteuses est donc réalisée avec une transformées de Fourier inverse et un seul modulateur utilisant une porteuse de signal à la fréquence $f_0$.

Ce signal d'émission v(t) est alors adapté à être émis par une antenne d'émission 16 dans le canal de communication.

Ce traitement permet en fait de réaliser l'équivalent numérique d'une modulation multi-porteuse, chaque symbole $s_j(m)$ étant modulé sur une sous-porteuses d'indice m de la porteuse de fréquence $f_0$.

La **figure 2** illustre les principes généraux d'un dispositif de réception 20 de données numériques utilisant cette même technologie OFDM.

Dans le dispositif de réception 20, une antenne de réception 26 reçoit un signal transmis sur le canal de communication et fournit un signal continu w(t).

Un filtre de réception 25 et un démodulateur 24 délivrent un flux série x de données numériques.

Ce flux série x de données numériques subit alors une transformation série-parallèle par le démultiplexeur 23 pour fournir M flux parallèles de symboles $x_j(m)$, notés $x_j(1)$, $x_j(2)$ à $x_j(M)$. A un instant temporel j, un vecteur $x_j$ de composantes $x_j(m)$, m compris entre 1 et M, est appelé symbole OFDM reçu.

Une transformée de Fourier rapide 22 fournit M flux de symboles $y_j(m)$, notés $y_j(1)$, $y_j(2)$ à $y_j(M)$ :

$$y_j(m) = \sum_{p=1}^{M} x_j(p).e^{\left(-\frac{2i\pi}{M}\right).(m-1).(p-1)}$$

Une transformation parallèle-série par le multiplexeur 21 fournit finalement des données numériques y de réception. Ce schéma de dispositif de réception 20 est donc un schéma symétrique du dispositif d'émission 10.

Les données numériques de réception y sont égales aux données numériques d'émission s, multipliées par un coefficient complexe correspondant à la valeur complexe de la fonction de transfert du canal de communication à la fréquence considérée. De nombreuses techniques connues d'estimation de canal sont utilisables pour déterminer ces valeurs complexes.

Le dispositif d'émission 10 peut être complété en amont par une étape de codage binaire et/ou une étape de codage correcteur d'erreurs. De nombreux procédés connus de codage binaire existent : codage à modulation de phase à m états, noté MDPm, ou codage de modulation d'amplitude en quadrature à m états, noté MAQm. De nombreux procédés connus de codage correcteur d'erreurs existent, dans lesquels des données redondantes sont ajoutées aux données à transmettre pour détecter et/ou corriger des erreurs de transmission dans le canal de communication.

Réciproquement, le dispositif de réception 20 peut être complété en aval par une étape de décodage binaire et/ou une étape de décodage correcteur d'erreurs.

D'autre part, un tel procédé de transmission utilisant la technologie OFDM peut être généralisé avec un dispositif MIMO (MIMO pour « Multi Input Multi Output ») comprenant plusieurs antennes d'émission et plusieurs antennes en réception. Dans un tel système, on cherche généralement à augmenter le débit de communication entre la base émettrice et un récepteur disposant de plusieurs antennes de réception.

Grâce à cette technologie OFDM, des signaux sont transmis dans le canal de communication en parallèle sur différentes sous-porteuses. De cette manière, des perturbations liées aux échos temporels dans le canal de communication sont réduites, et l'interférence inter-symboles (ISI) entre des symboles temporellement consécutifs est faible.

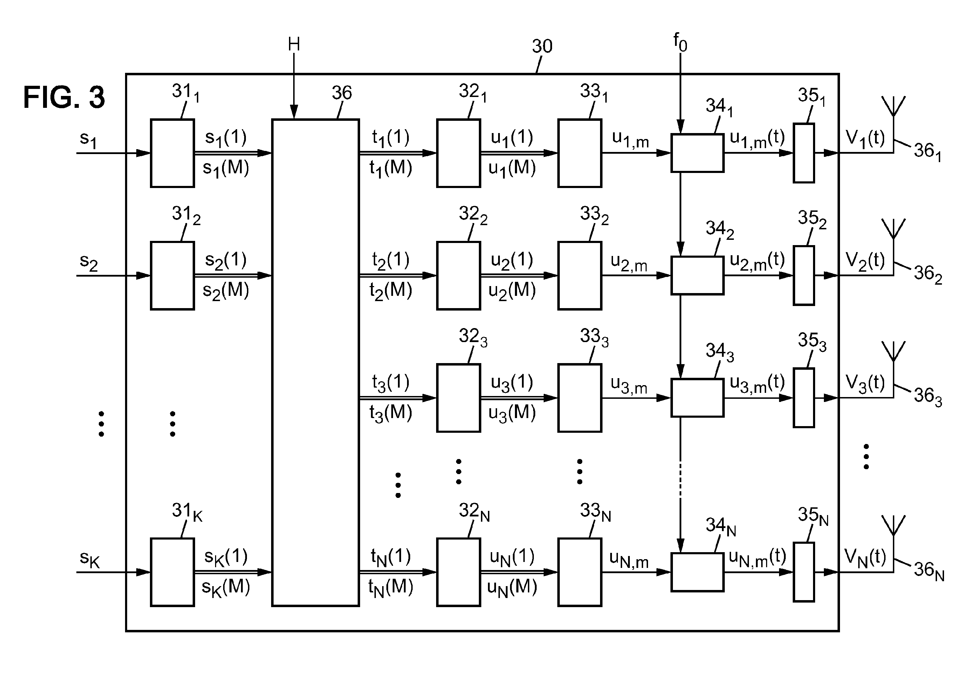

La **figure 3** illustre un mode de réalisation d'une base d'émission 30 selon l'invention, dans lequel on retrouve des éléments similaires au schéma de la figure 1.

La base d'émission 30 comporte une pluralité d'entrées de données numériques d'indice k, compris entre 1 et K, formant chacune un flux de données numériques $s_k$ indépendant et à destination d'un récepteur particulier de même indice. Nous avons donc une seule base d'émission 30 adaptée pour envoyer des données numériques distinctes vers K récepteurs. Ces K récepteurs sont situés à des positions différentes de l'espace. Le canal de communication entre la base d'émission 30 et les récepteurs présente alors des fonctions de transfert différentes entre ladite base d'émission et chaque récepteur d'indice k.

Chaque flux de données numériques $s_k$ alimente un démultiplexeur $31_1$, $31_2$, à $31_K$, qui convertit chaque flux de symboles $s_k$ en M flux parallèles de données numériques $s_k(m)$. Par exemple, pour le premier flux de données numériques $s_1$, le démultiplexeur $31_1$ génère les flux parallèles $s_1(m)$, notés $s_1(1)$ à $s_1(M)$ de symboles.

Sur la figure 3, les doubles flèches représentent alors M flux parallèles pour simplifier le schéma, en comparaison de la représentation utilisée en figures 1 et 2.

En outre, ces étapes de transformation sont effectuées à un instant temporel j comme dans le procédé décrit précédemment, mais les indices j sont omis pour plus de lisibilité des équations.

Un bloc de calcul 36 convertit alors les K.M flux parallèles de symboles $s_k(m)$ en N.M flux parallèles de symboles complexes $t_n(m)$, n étant un indice compris entre 1 et N, par le calcul suivant :

$$t_n(m) = \sum_{k=1}^{K} \alpha_k.H_{k,n}^{*}(m).s_k(m) \qquad (5)$$

où

\* dénote une valeur complexe conjuguée,

N représente le nombre d'antennes d'émission de la base d'émission 30,

$H_{k,n}(m)$ est une valeur complexe estimant le transfert du canal de communication entre l'antenne d'émission d'indice n et l'antenne de réception d'indice k à une fréquence correspondante d'une sous-porteuse d'indice m, et

$\alpha_k$ est un coefficient de normalisation.

Nous reviendront plus loin sur le calcul de ce coefficient de normalisation $\alpha_k$.

On comprendra que, dans ce calcul, il est avantageux d'avoir N>K, c'est-à-dire un nombre d'antennes d'émission supérieur au nombre d'antennes de réception.

Le bloc de calcul 36 est une sorte de pré-égalisation des données numériques bien particulière. Nous donnerons plus loin des explications sur les effets de ce calcul dans la base d'émission 30.

Les symboles complexes $t_n(m)$ peuvent être rassemblés en N vecteurs $t_n$, chacun d'eux correspondant à un symbole OFDM tel que présenté précédemment. Ce symbole OFDM est alors également traité de manière identique.

N transformées de Fourier rapide inverse $32_1$ à $32_N$ transforment les N.M flux parallèles de symboles complexes $t_n(m)$ en N.M flux parallèles de symboles complexes transformés $u_n(m)$ en utilisant N équation du type (1), qui peut être réécrite comme suit :

$$u_n(m) \; = \; \frac{1}{M} \cdot \sum_{p=1}^{M} t_n(p).e^{\left(+\frac{2i\pi}{M}\right).(m-1).(p-1)} \qquad (6)$$

N multiplexeurs $33_1$ à $33_N$ transforment alors ces N.M flux parallèles de symboles complexes transformés $u_n(m)$ en N flux série de symboles complexes transformés $u_{n,m}$, qui sont ensuite modulés de manière synchrone à la fréquence $f_0$ d'une porteuse par des modulateurs $34_1$ à $34_N$ pour générer les signaux modulés $u_{n,m}(t)$. Par exemple, pour une modulation en quadrature, on peut écrire :

$$u_{n,m}(t) \; = \; \Re\left(u_n(m).e^{2i\pi f_0 t}\right) \qquad (7)$$

Ces signaux modulés $u_{n,m}(t)$ sont alors filtrés par des filtres $35_1$ à $35_N$ pour générer des signaux filtrés $V_{n,m}(t)$ :

$$v_{n,m}(t) \; = \; u_{n,m}(t).h\left(t \, - \, (j-1).T_s \, - \, (m-1).\frac{T_s}{M}\right) \qquad (8)$$

Les N signaux d'émission $v_n(t)$ pour chaque antenne d'émission $36_1$ à $36_N$ peuvent alors être calculés par une double somme sur les indices j (symboles OFDM) et sur les indices m (sous-porteuses) :

$$v_n(t) \; = \; \sum_{j=1}^{\infty} \sum_{m=1}^{M} v_{n,m}(t) \qquad (9)$$

c'est-à-dire :

$$v_n(t) \; = \; \sum_{j=1}^{\infty} \sum_{m=1}^{M} u_{n,m}(t).h\left(t \, - \, (j-1).T_s \, - \, (m-1).\frac{T_s}{M}\right) \qquad (10)$$

Chaque signal d'émission $v_n(t)$ alimente alors une des N antennes d'émission $36_1$ à $36_N$.

La base d'émission 30 réalise donc une première étape de conversion dans un bloc de calcul 36, puis en parallèle N modulations multi-porteuses toutes synchronisées sur la porteuse de signal de fréquence $f_0$. pour produire les signaux d'émission $v_n(t)$.

Chaque récepteur utilisé avec la base de communication 30 est sensiblement identique au dispositif de réception 20 décrit en figure 2.

Il reçoit sur son antenne de réception 26 un signal qu'il transforme pour produire un flux de données numériques $z_k$ de réception à l'antenne k, du type :

$$z_k \; = \; c. \sum_{n=1}^{N} t_n(m) \, .H_{k,n}(m) \qquad (11)$$

où c est une constante complexe représentant les transformations supposées linéaires de transformées de Fourier inverse, modulation, démodulation et transformée de Fourier.

En remplaçant $t_n(m)$ par l'expression de la formule (5) et en inversant les sommes on obtient :

$$z_k = c.\sum_{n=1}^{N}\left(\sum_{k=1}^{K} H_{k,n}^{*}(m) \cdot s_k(m)\right).H_{k,n}(m)$$

$$z_k = c.\sum_{k=1}^{K}\left(\sum_{n=1}^{N} H_{k,n}^{*}(m).H_{k,n}(m)\right).s_k(m)$$

Par exemple, dans le cas du premier récepteur (k=1), la formule précédente se développe comme suit :

$$z_1 = c.\left[\sum_{n=1}^{N}\left|H_{1,n}\right|^{2}.s_1 + \sum_{n=1}^{N} H_{2,n}^{*}.H_{1,n}.s_2 +...\sum_{n=1}^{N} H_{K,n}^{*}.H_{1,n}.s_K\right]$$

Dans cette somme le premier terme est non nul, et les suivants sont faibles, et d'autant plus faibles que N est grand. Ainsi, on peut écrire :

$$z_1 \approx c.\sum_{n=1}^{N}\left|H_{1,n}\right|^{2}.s_1$$

D'une manière générale, on obtient :

$$z_k \approx c.\sum_{n=1}^{N}\left|H_{1,n}\right|^{2}.s_k \qquad\qquad (12)$$

Cette formule (12) signifie que chaque flux de données numériques $s_k$ destiné à l'antenne k est focalisé sur l'antenne k pour donner un flux de données de réception $z_k$, qui n'est pas perturbé par les autres flux de données numériques.

Le coefficient de normalisation $\alpha_k$ de la formule (5) peut être une constante prédéterminée.

Selon une première variante, le coefficient de normalisation $\alpha_k$ est calculé de telle sorte qu'une puissance moyenne $\Pi$ émise par la base d'émission 30 sur les sous-porteuses d'indice m est indépendante des récepteurs k et prend une valeur $\alpha$.

La puissance moyenne $\Pi$ vaut :

$$\Pi = \left\langle t_n(m).t_n^{*}(m) \right\rangle$$

La formule (5) peut être écrite de la manière suivante :

$$t_n(m) = \alpha.\sum_{k=1}^{K} H_{k,n}^{*}(m) .s_k(m) .$$

On a :

$$\Pi = \sum_n \left\langle t_n(m)t_n^*(m) \right\rangle = |\alpha|^2 \sum_n \sum_k \sum_{k'} H_{k,n}^*(m)H_{k',n}(m)\left\langle s_k(m)s_{k'}^*(m) \right\rangle$$

et

$$\Pi = |\alpha|^2 \left\langle |s|^2 \right\rangle \sum_n \sum_k \left| H_{k,n}(m) \right|^2$$

car : $\left\langle s_k(m)s_{k'}^*(m) \right\rangle = \left\langle s(m)^2 \right\rangle \delta_{k,k'}$, où < > représente la moyenne sur les symboles. $\langle |s(m)|^2 \rangle$ est la variance des symboles et $\langle s(m) \rangle = 0$.

La valeur $\alpha$ du coefficient de normalisation est alors calculée par :

$$|\alpha|^2 = \frac{\Pi}{\left\langle |s(m)|^2 \right\rangle \sum_n \sum_k \left| H_{k,n}(m) \right|^2}$$

où

$\Pi$ est une puissance moyenne émise prédéterminée,

< > représente une moyenne sur les symboles,

$\langle |s(m)|^2 \rangle$ est la variance des symboles.

Selon une deuxième variante, le coefficient de normalisation $\alpha_k$ est calculé de telle sorte à obtenir une amplitude de signal reçu identique sur chaque antenne de réception k.

Les symboles reçus sur chaque récepteur k sont alors :

$$z_{k'}(m) = \sum_n \alpha_{k'} \left| H_{k',n}(m) \right|^2 s_{k'}(m) \ ,$$

et

Son énergie est :

$$\left\langle \left| z_{k'}(m) \right|^2 \right\rangle = |\alpha_{k'}|^2 \left\langle |s(m)|^2 \right\rangle \left( \sum_n \left| H_{k',n}(m) \right|^2 \right)^2 = \beta^2 \ .$$

On souhaite que toutes les amplitudes soient les mêmes sur toutes les antennes de réception.

La puissance émise $\Pi$ peut alors être calculée par :

$$\Pi = \sum_n \left\langle t_n(m)t_n^*(m) \right\rangle = \sum_k \beta^2 \frac{\sum_n \left| H_{k,n}(m) \right|^2}{\left( \sum_n \left| H_{k,n}(m) \right|^2 \right)^2} = \beta^2 \sum_k \frac{1}{\left( \sum_n \left| H_{k,n}(m) \right|^2 \right)}$$

Le coefficient de normalisation $\alpha_k$ de la formule (5) peut alors être calculé par :

$$|\alpha_k|^2 = \frac{\Pi}{\left\langle |s(m)|^2 \right\rangle \left( \sum_n \left| H_{k,n}(m) \right|^2 \right)^2 \sum_k \left( \sum_n \left| H_{k,n}(m) \right|^2 \right)^{-1}}$$

où

$\Pi$ est une puissance moyenne émise prédéterminée,

$< >$ représente une moyenne sur les symboles,

$\langle |s(m)|^2 \rangle$ est la variance des symboles.

Selon une troisième variante, le coefficient de normalisation $\alpha_k$ est calculé en généralisant le calcul précédent, afin d'obtenir une valeur de puissance prédéterminée sur chaque antenne de réception.

Les symboles reçus sur chaque récepteur k sont alors :

$$z_{k'}(m) = \sum_n \alpha_{k'} \left| H_{k',n}(m) \right|^2 s_{k'}(m) \ ,$$

et

Son énergie est :

$$\left\langle \left| z_{k'}(m) \right|^2 \right\rangle = \left| \alpha_{k'} \right|^2 \left\langle |s(m)|^2 \right\rangle \left( \sum_n \left| H_{k',n}(m) \right|^2 \right)^2 = \gamma^2 \beta_{k'}^2 \ .$$

La puissance émise $\Pi$ peut alors être calculée par :

$$\Pi = \sum_n \left\langle t_n(m) t_n^*(m) \right\rangle = \gamma^2 \sum_k \beta_k^2 \frac{\sum_n \left| H_{k,n}(m) \right|^2}{\left( \sum_n \left| H_{k,n}(m) \right|^2 \right)^2} = \gamma^2 \sum_k \frac{\beta_k^2}{\left( \sum_n \left| H_{k,n}(m) \right|^2 \right)}$$

Le coefficient de normalisation $\alpha_k$ de la formule (5) peut alors être calculé par :

$$\left| \alpha_k \right|^2 = \frac{\Pi}{\left\langle |s(m)|^2 \right\rangle \left( \sum_n \left| H_{k,n}(m) \right|^2 \right)^2 \sum_{k'} \frac{\beta_{k'}^2}{\left( \sum_n \left| H_{k',n}(m) \right|^2 \right)}} \beta_k^2$$

où

$\Pi$ est une puissance moyenne émise prédéterminée,

$\beta_k$ est une puissance moyenne prédéterminée reçue par l'antenne de réception k,

$< >$ représente une moyenne sur les symboles,

$\langle |s(m)|^2 \rangle$ est la variance des symboles.

Selon les variantes suivantes, seule la phase du transfert du canal de communication $H_{k,n}(m)$ est utilisée (le module étant considéré égal à 1) pour calculer les N.M symboles complexes $t_n(m)$. On a donc :

$$t_n(m) = \sum_k \alpha_k \exp(i \arg(H_{k,n}^*(m))) s_k(m)$$

Selon une quatrième variante, similaire à la première variante, mais dans laquelle seule la phase du transfert du canal de communication $H_{k,n}(m)$ est utilisée, la valeur $\alpha$ du coefficient de normalisation est alors calculée par :

$$\left| \alpha_k \right|^2 = \left| \alpha \right|^2 = \frac{\Pi}{\left\langle |s(m)|^2 \right\rangle NK}$$

où

$\Pi$ est une puissance moyenne émise prédéterminée,

< > représente une moyenne sur les symboles,

$\langle |s(m)|^2 \rangle$ est la variance des symboles.

Selon une cinquième variante, similaire à la deuxième variante, mais dans laquelle seule la phase du transfert du canal de communication $H_{k',n}(m)$ est utilisée.

Les symboles reçus sur chaque récepteur k sont alors en négligeant les interférences inter-utilisateurs, c'est-à-dire entre chaque antenne de réception k :

$$z_{k'}(m) = \sum_n \alpha_{k'} \left| H_{k',n}(m) \right| s_{k'}(m) \ ,$$

et

Son énergie est :

$$\left\langle \left| z_{k'}(m) \right|^2 \right\rangle = \left| \alpha_{k'} \right|^2 \left\langle \left| s(m) \right|^2 \right\rangle \left( \sum_n \left| H_{k',n}(m) \right| \right)^2 = \beta^2 \ .$$

On souhaite que toutes les amplitudes soient les mêmes sur toutes les antennes de réception.

La puissance émise $\Pi$ peut alors être calculée par :

$$\Pi = \sum_n \left\langle t_n(m) t_n^*(m) \right\rangle = \sum_k \beta^2 \frac{N}{\left( \sum_n \left| H_{k,n}(m) \right| \right)^2}$$

Le coefficient de normalisation $\alpha_k$ de la formule (5) peut alors être calculé par :

$$\left| \alpha_k \right|^2 = \frac{1}{\left\langle \left| s \right|^2 \right\rangle} \frac{\Pi}{\left( \sum_n \left| H_{k,n}(m) \right| \right)^2 N \sum_{k'} \left( \sum_n \left| H_{k',n}(m) \right| \right)^{-2}}$$

où

$\Pi$ est une puissance moyenne émise prédéterminée,

< > représente une moyenne sur les symboles,

$\langle |s(m)|^2 \rangle$ est la variance des symboles.

Selon une sixième variante, similaire à la troisième variante, mais dans laquelle seule la phase du transfert du canal de communication $H_{k,n}(m)$ est utilisée.

Les symboles reçus sur chaque récepteur k sont alors :

$$z_{k'}(m) = \sum_n \alpha_{k'} \left| H_{k',n}(m) \right| s_{k'}(m) \ ,$$

et

Son énergie est :

$$\left\langle \left| z_{k'}(m) \right|^2 \right\rangle = \left| \alpha_{k'} \right|^2 \left\langle \left| s(m) \right|^2 \right\rangle \left( \sum_n \left| H_{k',n}(m) \right| \right)^2 = \gamma^2 \beta_{k'}^2 \ .$$

La puissance émise $\Pi$ peut alors être calculée par :

$$\Pi = \sum_n \left\langle t_n(m)t_n^*(m) \right\rangle = \gamma^2 \sum_k \beta_k^2 \frac{N}{\left( \sum_n \left| H_{k,n}(m) \right| \right)^2}$$

Le coefficient de normalisation $\alpha_k$ de la formule (5) peut alors être calculé par :

$$\left| \alpha_k \right|^2 = \frac{1}{\left\langle \left| s \right|^2 \right\rangle} \frac{\Pi \beta_k^2}{\left( \sum_n \left| H_{k,n}(m) \right| \right)^2 N \sum_{k'} \frac{\beta_{k'}^2}{\left( \sum_n \left| H_{k',n}(m) \right| \right)^2}}$$

où

$\Pi$ est une puissance moyenne émise prédéterminée,
$\beta_k$ est une puissance moyenne prédéterminée reçue par l'antenne de réception k,
< > représente une moyenne sur les symboles, $\langle |s(m)|^2 \rangle$ est la variance des symboles.
Enfin, une base de réception selon l'invention peut alors réalisée sur les mêmes principes. Celle-ci comprendra un bloc de calcul avant des démodulateurs OFDM comprenant chacun une transformée de Fourier rapide.

## Revendications

**1.** Procédé pour émettre des données numériques sur un canal de communication, entre :

- une base émettrice comprenant des antennes d'émission d'indice n, n compris entre 1 et N, N entier naturel supérieur ou égal à 1, et
- des récepteurs d'indice k, k compris entre 1 et K, K entier naturel supérieur à 1, comprenant chacun au moins une antenne de réception,
procédé dans lequel on utilise une porteuse de signal de fréquence $f_0$ pour transmettre les données numériques dans le canal de communication, et des sous-porteuses d'indice m, m compris entre 1 et M, M entier naturel supérieur ou égal à 1, adaptées pour transmettre en parallèle K flux de données numériques $s_k$ de la base émettrice , chaque flux de données numériques $s_k$ étant destiné à chaque récepteur d'indice k,
ledit procédé comprenant les étapes suivantes :

(a1) on transforme chacun des K flux de données numériques $s_k$ en M flux parallèles $s_k(m)$ de symboles, chacun des flux parallèles étant destiné à une sous-porteuse d'indice m,
(b1) on calcule N.M symboles complexes $t_n(m)$ à partir des K.M symboles $s_k(m)$, par :

$$t_n(m) = \sum_{k=1}^{K} \alpha_k . H_{k,n}^*(m) . s_k(m)$$

où

\* dénote une valeur complexe conjuguée, $H_{k,n}(m)$ est une valeur complexe estimant la fonction de transfert du canal de communication entre l'antenne d'émission n et l'antenne de réception k à une fréquence correspondante de la sous-porteuse m, et
$\alpha_k$ est un coefficient de normalisation,
(c1) on réalise N modulations multi-porteuses des symboles complexes $t_n(m)$, m compris entre 1 et M, pour produire N signaux d'émission $v_n(t)$, chaque signal d'émission $v_n(t)$ étant destiné à une antenne d'émission n, et toutes les modulations multi-porteuses étant synchrones entre-elles, et
(d1) on émet chaque signal d'émission $v_n(t)$ dans le canal de communication par l'antenne d'émission n de la base émettrice.

2. Procédé selon la revendication 1, dans lequel la modulation multi-porteuses des symboles complexes $t_n(m)$, m compris entre 1 et M, est effectuée par les étapes suivantes :

(a2) on calcule une transformée de Fourier inverse (IFFT) des symboles complexes $t_n(m)$ pour produire des symboles complexes transformés $u_n(m)$, par :

$$u_n(m) = IFFT(t_n(m)), \text{ pour m compris entre 1 et M,}$$

(b2) on met temporellement en série ces symboles complexes transformés $u_n(m)$ dans un flux série de symboles,
(c2) on réalise une modulation synchrone de ce flux série avec la porteuse de signal de fréquence $f_0$ pour produire des signaux modulés $u_{n,m}(t)$ de chaque antenne d'émission n par :

$$u_{n,m}(t) = \Re\left(u_n(m).e^{2i\pi f_0 t}\right)$$

où

$\Re( )$ est la partie réelle,

i est le nombre complexe défini par $i = \sqrt{-1}$, et

t est le temps,
(d2) on filtre chaque signal modulé $u_{n,m}(t)$ et on produit un signal d'émission $v_n(t)$ pour chaque antenne d'émission, par :

$$v_n(t) = \sum_{j=1}^{\infty} \sum_{m=1}^{M} u_{n,m}(t).h\left(t - (j-1).T_S - (m-1).\frac{T_S}{M}\right)$$

où
h(t) est la réponse impulsionnelle d'un filtre en émission.

3. Procédé selon la revendication précédente, dans lequel la transformée de Fourier inverse (IFFT) des symboles complexes $t_n(m)$ pour produire des symboles complexes transformés $u_n(m)$ est calculée par :

$$u_n(m) = \frac{1}{M}.\sum_{p=1}^{M} t_n(p).e^{\left(+\frac{2i\pi}{M}\right).(m-1).(p-1)}$$

4. Procédé selon l'une des revendications précédentes, dans lequel le coefficient de normalisation $\alpha$ est une constante prédéterminée.

5. Procédé selon l'une des revendications 1 à 3, dans lequel le coefficient de normalisation $\alpha_k$ est une valeur calculée à partir des valeurs des symboles $s_k(m)$ et des valeurs des fonctions de transfert du canal de communication $H_{k,n}(m)$.

6. Procédé selon la revendication 5, dans lequel le coefficient de normalisation $\alpha_k$ est calculé par :

$$|\alpha|^2 = \frac{\Pi}{\left\langle |s(m)|^2 \right\rangle \sum_n \sum_k |H_{k,n}(m)|^2} = \alpha_k$$

où

$\Pi$ est une puissance moyenne émise prédéterminée,

< > représente une moyenne sur les symboles,

$\langle |s(m)|^2 \rangle$ est la variance des symboles.

**7.** Procédé selon la revendication 5, dans lequel le coefficient de normalisation $\alpha_k$ est calculé par :

$$\left| \alpha_k \right|^2 = \frac{\Pi}{\left\langle \left| s(m) \right|^2 \right\rangle \left( \sum_n \left| H_{k,n}(m) \right|^2 \right)^2 \sum_k \left( \sum_n \left| H_{k,n}(m) \right|^2 \right)^{-1}}$$

où

$\Pi$ est une puissance moyenne émise prédéterminée,

< > représente une moyenne sur les symboles,

$\langle |s(m)|^2 \rangle$ est la variance des symboles.

**8.** Procédé selon la revendication 5, dans lequel le coefficient de normalisation $\alpha_k$ est calculé par :

$$\left| \alpha_k \right|^2 = \frac{\Pi}{\left\langle \left| s(m) \right|^2 \right\rangle \left( \sum_n \left| H_{k,n}(m) \right|^2 \right)^2 \sum_{k'} \frac{\beta_{k'}^2}{\left( \sum_n \left| H_{k',n}(m) \right|^2 \right)}} \beta_k^2$$

où

$\Pi$ est une puissance moyenne émise prédéterminée,

$\beta_k$ est une puissance moyenne prédéterminée reçue par l'antenne de réception k,

< > représente une moyenne sur les symboles,

$\langle |s(m)|^2 \rangle$ est la variance des symboles.

**9.** Procédé selon l'une des revendications précédentes, dans lequel chaque valeur complexe $H_{k,n}(m)$ est une valeur estimant uniquement la phase du transfert du canal de communication entre l'antenne d'émission n et l'antenne de réception k à la fréquence correspondante de la sous-porteuse m.

**10.** Procédé selon la revendication 9, dans lequel le coefficient de normalisation $\alpha_k$ est calculé par :

$$\left| \alpha_k \right|^2 = \left| \alpha \right|^2 = \frac{\Pi}{\left\langle \left| s(m) \right|^2 \right\rangle NK}$$

où

$\Pi$ est une puissance moyenne émise prédéterminée,

< > représente une moyenne sur les symboles, $\langle |s(m)|^2 \rangle$ est la variance des symboles.

**11.** Procédé selon la revendication 9, dans lequel le coefficient de normalisation $\alpha_k$ est calculé par :

$$\left| \alpha_k \right|^2 = \frac{\Pi}{\left\langle \left| s \right|^2 \right\rangle \left( \sum_n \left| H_{k,n}(m) \right| \right)^2 N \sum_{k'} \left( \sum_n \left| H_{k',n}(m) \right| \right)^{-2}}$$

où

$\Pi$ est une puissance moyenne émise prédéterminée,

< > représente une moyenne sur les symboles,

$\langle |s(m)|^2 \rangle$ est la variance des symboles.

**12.** Procédé selon la revendication 9, dans lequel le coefficient de normalisation $\alpha_k$ est calculé par :

$$|\alpha_k|^2 = \frac{1}{\langle |s|^2 \rangle} \frac{\Pi \beta_k^2}{\left( \sum_n |H_{k,n}(m)| \right)^2 N \sum_{k'} \frac{\beta_{k'}^2}{\left( \sum_n |H_{k',n}(m)| \right)^2}}$$

où

$\Pi$ est une puissance moyenne émise prédéterminée,

$\beta_k$ est une puissance moyenne prédéterminée reçue par l'antenne de réception k,

< > représente une moyenne sur les symboles,

$\langle |s(m)|^2 \rangle$ est la variance des symboles.

**13.** Base émettrice comprenant :

- des moyens de calcul adaptés pour mettre en oeuvre le procédé selon l'une des revendications 1 à 8 et générer N signaux d'émission $v_n(t)$ d'indice n, n compris entre 1 et N, N entier naturel supérieur ou égal à 1, à partir de K flux de données numériques $s_k$ d'indice k, k compris entre 1 et K, K entier naturel supérieur à 1, et
- des antennes d'émission adaptées pour émettre dans un canal de communication chaque signal d'émission $v_n(t)$.

**Patentansprüche**

**1.** Verfahren zum Senden von digitalen Daten auf einem Kommunikationskanal zwischen:

- einer Sendebasis mit Sendeantennen mit dem Index n, wobei n zwischen 1 und N beträgt und N eine natürliche ganze Zahl größer oder gleich 1 ist, und
- Empfängern mit dem Index k, wobei k zwischen 1 und K beträgt und K eine natürliche ganze Zahl größer 1 ist, und die mindestens eine Empfangsantenne aufweisen,

wobei bei dem Verfahren ein Frequenzsignalträger $f_0$ zum Senden der digitalen Daten im Kommunikationskanal und Unterträger mit dem Index m verwendet werden, wobei m zwischen 1 und M beträgt und M eine natürliche ganze Zahl größer oder gleich 1 ist, wobei diese dazu geeignet sind, K Ströme digitaler Daten $s_k$ von der Sendebasis parallel zu senden und jeder Strom digitaler Daten $s_k$ für jeden Empfänger mit dem Index k bestimmt ist,

wobei das Verfahren die nachfolgenden Schritte umfasst:

(a1) Umwandeln jedes der K Ströme digitaler Daten $s_k$ in M parallele Ströme $s_k(m)$ von Symbolen, wobei jeder der parallelen Ströme für einen Unterträger mit dem Index m vorgesehen ist,

(b1) Berechnen von N.M komplexen Symbolen $t_n(m)$ ausgehend von den K.M Symbolen $s_k(m)$ durch:

$$t_n(m) = \sum_{k=1}^{K} \alpha_k \cdot H_{k,n}^*(m) \cdot s_k(m)$$

wobei * einen zugeordneten komplexen Wert bezeichnet,

$H_{k,n}(m)$ ein komplexer Wert ist, der die Übertragungsfunktion des Kommunikationskanals zwischen der Sendeantenne n und der Empfangsantenne k bei entsprechender Frequenz des Unterträgers m schätzt, und

$\alpha_k$ ein Normalisierungskoeffizient ist,

(c1) Durchführen von N Multiträgermodulationen der komplexen Symbole $t_n(m)$, wobei m zwischen 1 und M beträgt, um N Sendesignale $v_n(t)$ zu erzeugen, wobei jedes Sendesignal $v_n(t)$ für eine Sendeantenne n bestimmt ist und alle Multiträgermodulationen zueinander synchron sind, und

(d1) Senden jedes Sendesignals $v_n(t)$ von der Sendeantenne n der Sendebasis im Kommunikationskanal.

2. Verfahren nach Anspruch 1, bei dem die Multiträgermodulation der komplexen Symbole $t_n(m)$, wobei m zwischen 1 und M beträgt, in den nachfolgenden Schritten durchgeführt wird:

(a2) Berechnen einer inversen Fourier-Transformation (IFFT) der komplexen Symbole $t_n(m)$, um transformierte komplexe Symbole $u_n(m)$ zu bilden, durch:

$$U_n(m) = \text{IFFT}(t_n(m)), \text{ mit m zwischen 1 und M,}$$

(b2) temporäres Inreihebringen dieser transformierten komplexen Symbole $u_n(m)$ in einem seriellen Symbolstrom,

(c2) Durchführen einer synchronen Modulation dieses seriellen Stroms mit dem Frequenzsignalträger $f_0$ zur Erzeugung von modulierten Signalen $u_{n,m}(t)$ jeder Sendeantenne n durch:

$$u_{n,m}(t) = \Re\left(u_n(m).e^{2i\pi f_0 t}\right)$$

wobei

$\Re()$ der reelle Teil ist,

i die durch $i = \sqrt{-1}$ definierte komplexe Zahl ist und

t die Zeit ist,

(d2) Filtern jedes modulierten Signals $u_{n,m}(t)$ und Erzeugen eines Sendesignals $v_n(t)$ für jede Sendeantenne durch:

$$v_n(t) = \sum_{j=1}^{\infty} \sum_{m=1}^{M} u_{n,m}(t).h\left(t - (j-1).T_s - (m-1).\frac{T_s}{M}\right)$$

wobei h(t) die Impulsantwort eines sendenden Filters ist.

3. Verfahren nach dem vorhergehenden Anspruch, bei dem die inverse Fourier-Transformation (IFFT) der komplexen Symbole $t_n(m)$ zur Bildung von transformierten komplexen Symbolen $u_n(m)$ wie folgt berechnet wird:

$$u_n(m) = \frac{1}{M}.\sum_{p=1}^{M} t_n(p).e^{\left(+\frac{2i\pi}{M}\right).(m-1).(p-1)}$$

4. Verfahren nach einem der vorhergehenden Ansprüche, bei dem der Normalisierungskoeffizient $\alpha$ eine vorbestimmte Konstante ist.

5. Verfahren nach einem der Ansprüche 1 bis 3, bei dem der Normalisierungskoeffizient $\alpha_k$ ein Wert ist, der ausgehend von den Werten der Symbole $s_k(m)$ und den Werten der Übertragungsfunktionen des Kommunikationskanals $H_{k,n}(m)$ berechnet wird.

6. Verfahren nach Anspruch 5, bei dem der Normalisierungskoeffizient $\alpha_k$ wie folgt berechnet wird:

$$|\alpha|^2 = \frac{\Pi}{\langle|s(m)|^2\rangle \sum_n \sum_k |H_{k,n}(m)|^2} = \alpha_k$$

wobei
$\Pi$ eine vorbestimmte gesendete Durchschnittsleistung ist,
$\langle \rangle$ einen Durchschnitt der Symbole darstellt,
$(|s(m)^2|)$ die Varianz der Symbole ist.

**7.** Verfahren nach Anspruch 5, bei dem der Normalisierungskoeffizient $\alpha_k$ wie folgt berechnet wird:

$$|\alpha_k|^2 = \frac{\Pi}{\langle|s(m)|^2\rangle \left(\sum_n |H_{k,n}(m)|^2\right)^2 \sum_k \left(\sum_n |H_{k,n}(m)|^2\right)^{-1}}$$

wobei
$\Pi$ eine vorbestimmte gesendete Durchschnittsleistung ist,
$\langle \rangle$ einen Durchschnitt der Symbole darstellt,
$(|s(m)^2|)$ die Varianz der Symbole ist.

**8.** Verfahren nach Anspruch 5, bei dem der Normalisierungskoeffizient $\alpha_k$ wie folgt berechnet wird:

$$|\alpha_k|^2 = \frac{\Pi}{\langle|s(m)|^2\rangle \left(\sum_n |H_{k,n}(m)|^2\right)^2 \sum_{k'} \frac{\beta_{k'}^2}{\left(\sum_n |H_{k',n}(m)|^2\right)}} \beta_k^2$$

wobei
$\Pi$ eine vorbestimmte gesendete Durchschnittsleistung ist,
$\beta_k$ eine vorbestimmte Durchschnittsleistung ist, die von der Empfangsantenne k empfangen wird,
$\langle \rangle$ einen Durchschnitt der Symbole darstellt,
$(|s(m)^2|)$ die Varianz der Symbole ist.

**9.** Verfahren nach einem der vorhergehenden Ansprüche, bei dem jeder komplexe Wert $H_{k,n}(m)$ ein Wert ist, der lediglich die Übertragungsphase des Kommunikationskanals zwischen der Sendeantenne n und der Empfangsantenne k bei entsprechender Frequenz des Unterträgers m schätzt.

**10.** Verfahren nach Anspruch 9, bei dem der Normalisierungskoeffizient $\alpha_k$ wie folgt berechnet wird:

$$|\alpha_k|^2 = |\alpha|^2 = \frac{\Pi}{\langle|s(m)|^2\rangle NK}$$

wobei
$\Pi$ eine vorbestimmte gesendete Durchschnittsleistung ist,
$\langle \rangle$ einen Durchschnitt der Symbole darstellt,
$(|s(m)^2|)$ die Varianz der Symbole ist.

**11.** Verfahren nach Anspruch 9, bei dem der Normalisierungskoeffizient $\alpha_k$ wie folgt berechnet wird:

$$|\alpha_k|^2 = \frac{\Pi}{\left\langle |s|^2 \right\rangle \left( \sum_n |H_{k,n}(m)| \right)^2 N \sum_{k'} \left( \sum_n |H_{k',n}(m)| \right)^{-2}}$$

wobei

$\Pi$ eine vorbestimmte gesendete Durchschnittsleistung ist,

< > einen Durchschnitt der Symbole darstellt,

$(|s(m)^2|)$ die Varianz der Symbole ist.

**12.** Verfahren nach Anspruch 9, bei dem der Normalisierungskoeffizient $\alpha_k$ wie folgt berechnet wird:

$$|\alpha_k|^2 = \frac{\Pi \beta_k^2}{\left\langle |s|^2 \right\rangle \left( \sum_n |H_{k,n}(m)| \right)^2 N \sum_{k'} \frac{\beta_{k'}^2}{\left( \sum_n |H_{k',n}(m)| \right)^2}}$$

wobei

$\Pi$ eine vorbestimmte gesendete Durchschnittsleistung ist,

$\beta_k$ eine vorbestimmte Durchschnittsleistung ist, die von der Empfangsantenne k empfangen wird,

< > einen Durchschnitt der Symbole darstellt,

$(|s(m)^2|)$ die Varianz der Symbole ist.

**13.** Sendebasis, mit:

- Berechnungsmitteln, die dazu geeignet sind, das Verfahren nach einem der Ansprüche 1 bis 8 durchzuführen und ausgehend von K Strömen digitaler Daten $s_k$ mit dem Index k, wobei k zwischen 1 und K beträgt und K eine natürliche ganze Zahl größer 1 ist, N Sendesignale $v_n(t)$ mit dem Index n zu erzeugen, wobei n zwischen 1 und N beträgt und N eine natürliche ganze Zahl größer oder gleich 1 ist, und
- Sendeantennen, die dazu geeignet sind, jedes Sendesignal $v_n(t)$ in einem Kommunikationskanal zu senden.

**Claims**

**1.** Method for transmitting digital data over a communication channel, between:

- a transmitter base comprising transmission antennas of index n, where n is between 1 and N and N is an integer greater than or equal to 1, and
- receivers of index k, where k is between 1 and K and K is an integer greater than or equal to 1, each comprising at least one receiving antenna,

a method wherein a signal carrier of frequency $f_o$ is used to transport the digital data in the communication channel, and sub-carriers are used of index m, where m is between 1 and M and M is an integer greater than or equal to 1, adapted to transport K streams of digital data $s_k$ in parallel from the transmitter base, each stream of digital data $s_k$ being intended for each receiver of index k,

wherein said method comprises the following steps:

(a1) each of the K streams of digital data $s_k$ are transformed into M parallel streams $s_k(m)$ of symbols, each of the parallel streams being intended for a sub-carrier of index m,

(b1) N.M complex symbols $t_n(m)$ are calculated from the K.M symbols $s_k(m)$, by:

$$t_n(m) = \sum_{k=1}^{K} \alpha_k . H_{k,n}{}^{*}(m) . s_k(m)$$

where

* denotes a complex conjugate,

$H_{k,n}(m)$ is a complex value estimating the transfer function of the communication channel between the transmission antenna n and the receiving antenna k at a corresponding frequency of the sub-carrier m, and

$\alpha_k$ is a normalization coefficient,

(c1) N multi-carrier modulations of the complex symbols $t_n(m)$ are performed, where m is between 1 and M, to produce N transmission signals $v_n(t)$, each transmission signal $v_n(t)$ being intended for a transmission antenna n, and all the multi-carrier modulations being synchronous with each other, and

(d1) each transmission signal $v_n(t)$ in the communication channel is transmitted by the transmission antenna n of the transmitter base.

2. Method according to claim 1, wherein the multi-carrier modulation of the complex symbols $t_n(m)$, where m is between 1 and M, is done by the following steps:

(a2) an inverse fast Fourier transform (IFFT) of the complex symbols $t_n(m)$ is calculated to produce transformed complex symbols $u_n(m)$, by:

$$u_n(m) = IFFT\big(t_n(m)\big),$$

where m is between 1 and M,

(b2) temporal serialization of these transformed complex symbols $u_n(m)$ into a serial stream of symbols is performed,

(c2) a synchronous modulation of this serial stream is performed with the signal carrier of frequency $f_o$ to produce modulated signals $u_{n,m}(t)$ from each transmission antenna n by:

$$u_{n,m}(t) = \Re\big(u_n(m) . e^{2i\pi f_0 t}\big)$$

where

$\Re()$ is the real part,

i is the complex number defined by $i = \sqrt{-1}$, and

t is the time,

(d2) each modulated signal $u_{n,m}(t)$ is filtered and a transmission signal $v_n(t)$ is produced for each transmission antenna, by:

$$v_n(t) = \sum_{j=1}^{\infty} \sum_{m=1}^{M} u_{n,m}(t) . h\left(t - (j-1).T_S - (m-1).\frac{T_S}{M}\right)$$

where

h(t) is the impulse response of a transmission filter.

3. Method according to the preceding claim, wherein the inverse fast Fourier transform (IFFT) of the complex symbols $t_n(m)$ to produce transformed complex symbols $u_n(m)$ is calculated by:

$$u_n(m) = \frac{1}{M} \cdot \sum_{p=1}^{M} t_n(p) \cdot e^{\left(+\frac{2i\pi}{M}\right).(m-1).(p-1)}$$

4. Method according to any one of the preceding claims, wherein the normalization coefficient $\alpha$ is a predetermined constant.

5. Method according to any one of claims 1 to 3, wherein the normalization coefficient $\alpha_k$ is a value calculated from the values of the symbols $s_k(m)$ and the values of the transfer functions of the communication channel $H_{k,n}(m)$.

6. Method according to claim 5, wherein the normalization coefficient $\alpha_k$ is calculated by:

$$|\alpha|^2 = \frac{\Pi}{\langle |s(m)|^2 \rangle \sum_n \sum_k |H_{k,n}(m)|^2} = \alpha_k$$

where
$\Pi$ is a predetermined mean transmitted power,
< > represents a mean for the symbols,
$\langle |s(m)|^2 \rangle$ is the variance of the symbols.

7. Method according to claim 5, wherein the normalization coefficient $\alpha_k$ is calculated by:

$$|\alpha_k|^2 = \frac{\Pi}{\langle |s(m)|^2 \rangle \left( \sum_n |H_{k,n}(m)|^2 \right)^2 \sum_k \left( \sum_n |H_{k,n}(m)|^2 \right)^{-1}}$$

where
$\Pi$ is a predetermined mean transmitted power,
< > represents a mean for the symbols, $\langle |s(m)|^2 \rangle$ is the variance of the symbols.

8. Method according to claim 5, wherein the normalization coefficient $\alpha_k$ is calculated by:

$$|\alpha_k|^2 = \frac{\Pi}{\langle |s(m)|^2 \rangle \left( \sum_n |H_{k,n}(m)|^2 \right)^2 \sum_{k'} \frac{\beta_{k'}^2}{\left( \sum_n |H_{k',n}(m)|^2 \right)}} \beta_k^2$$

where
$\Pi$ is a predetermined mean transmitted power,
$\beta_k$ is a predetermined mean power received by the receiving antenna k,
< > represents a mean for the symbols,
$\langle |s(m)|^2 \rangle$ is the variance of the symbols.

9. Method according to any one of the preceding claims, wherein each complex value $H_{k,n}(m)$ is a value estimating only the phase of the transfer of the communication channel between the transmission antenna n and the receiving antenna k at the corresponding frequency of the sub-carrier m.

10. Method according to claim 9, wherein the normalization coefficient $\alpha_k$ is calculated by:

$$|\alpha_k|^2 = |\alpha|^2 = \frac{\Pi}{\langle |s(m)|^2 \rangle NK}$$

where

n is a predetermined mean transmitted power,

< > represents a mean for the symbols,

$\langle |s(m)|^2 \rangle$ is the variance of the symbols.

11. Method according to claim 9, wherein the normalization coefficient $\alpha_k$ is calculated by:

$$|\alpha_k|^2 = \frac{\Pi}{\langle |s|^2 \rangle \left( \sum_n |H_{k,n}(m)| \right)^2 N \sum_{k'} \left( \sum_n |H_{k',n}(m)| \right)^{-2}}$$

where

$\Pi$ is a predetermined mean transmitted power,

< > represents a mean for the symbols,

$\langle |s(m)|^2 \rangle$ is the variance of the symbols.

12. Method according to claim 9, wherein the normalization coefficient $\alpha_k$ is calculated by:

$$|\alpha_k|^2 = \frac{\Pi \beta_k^2}{\langle |s|^2 \rangle \left( \sum_n |H_{k,n}(m)| \right)^2 N \sum_{k'} \dfrac{\beta_{k'}^2}{\left( \sum_n |H_{k',n}(m)| \right)^2}}$$

where

$\Pi$ is a predetermined mean transmitted power,

$\beta_k$ is a predetermined mean power received by the receiving antenna k,

< > represents a mean for the symbols,

$\langle |s(m)|^2 \rangle$ is the variance of the symbols.

13. Transmitter base comprising:

- a calculation means adapted to implement the method according to any one of claims 1 to 8 and to generate N transmission signals $v_n(t)$ of index n, where n is between 1 and N and N is an integer greater than or equal to 1, from K streams of digital data $s_k$ of index k, where k is between 1 and K and K is an integer greater than or equal to 1, and

- transmission antennas adapted to transmit each transmission signal $v_n(t)$ in a communication channel.

**FIG. 1**

**FIG. 2**

FIG. 3

EP 2 499 796 B1

**RÉFÉRENCES CITÉES DANS LA DESCRIPTION**

**Documents brevets cités dans la description**

- US 2005180312 A
- FR 2748137